## Europäisches Patentamt

## European Patent Office

## Office européen des brevets

(19)

(11) Veröffentlichungsnummer: **0 102 507**
**B1**

(12)

# EUROPÄISCHE PATENTSCHRIFT

(45) Veröffentlichungstag der Patentschrift:
**05.10.88**

(51) Int. Cl.⁴: **F 02 M 53/06**, F 02 M 57/00

(21) Anmeldenummer: **83107363.0**

(22) Anmeldetag: **27.07.83**

(54) **Einrichtung zum Einspritzen von Kraftstoff in Brennräume von selbstzündenden Brennkraftmaschinen.**

(30) Priorität: **14.08.82 DE 3230387**
**01.03.83 DE 3307109**

(43) Veröffentlichungstag der Anmeldung:
**14.03.84 Patentblatt 84/11**

(45) Bekanntmachung des Hinweises auf die Patenterteilung:
**05.10.88 Patentblatt 88/40**

(84) Benannte Vertragsstaaten:
**DE FR GB IT**

(56) Entgegenhaltungen:
**DE - A - 2 843 534**
**DE - A - 3 010 591**
**DE - C - 834 467**
**FR - A - 1 382 697**
**US - A - 1 693 931**
**US - A - 3 926 169**

(73) Patentinhaber: **ROBERT BOSCH GMBH, Postfach 50,**
**D-7000 Stuttgart 1 (DE)**

(72) Erfinder: **Frey, Thomas, Dr., Falkenstrasse 21,**
**D-7251 Friolzheim (DE)**
Erfinder: **Grünwald, Werner, Dr. Dipl.-Phys., Robert**
**Schumannstrasse 21, D-7016 Gerlingen (DE)**
Erfinder: **Imhof, Ernst, Danziger Strasse 3/1,**
**D-7015 Münchingen (DE)**
Erfinder: **Komaroff, Iwan, Schwabelweiser Weg 13a,**
**D-8400 Regensburg (DE)**
Erfinder: **Schmid, Günther, Fleischhauerstrasse 10,**
**D-7000 Stuttgart 80 (DE)**
Erfinder: **Schmid, Kurt, Schlossstrasse 55,**
**D-7257 Ditzingen 4 (DE)**
Erfinder: **Reum, Helmut, Kaisersiautererstrasse 1,**
**D-7000 Stuttgart 31 (DE)**

ACTORUM AG

**Beschreibung**

Die Erfindung geht aus von Einrichtungen zum Einspritzen von Kraftstoff nach den Gattungen der unabhängigen Patentansprüche 1 und 2. Bei einer bekannten Einrichtung nach diesen Gattungen (DE-C 834 467) ist als Glühkörper eine Glühwendel vorgesehen, die frei im Anfangsbereich eines langgestreckten Verbrennungsraumes angeordnet ist, der in den Motorzylinder einmündet und in welchem der durch den Glühkörper bzw. die Glühwendel hindurchgespritzte Kraftstoff bereits gezündet werden soll. Um die Voraussetzung dafür zu schaffen, ist der Motorzylinder mit dem Verbrennungsraum über einen Kanal verbunden, der sich parallel neben dem Verbrennungsraum erstreckt und etwa im Bereich des stromabliegenden Endes des Glühkörpers bzw. der Glühwendel in den Verbrennungsraum seitlich einmündet. Über diesen Kanal wird durch Injektorwirkung der Einspritzstrahlen die zur Zündung des Kraftstoffs im Verbrennungsraum erforderliche Luft aus dem Motorzylinder angesaugt. Mit dieser Anordnung soll die zur Selbstzündung des Kraftstoffs notwendige Verdichtung herabgesetzt werden. Die über den Kanal aus dem Motorzylinder angesaugte Luft kann jedoch nicht am Glühkörper bzw. an der Glühwendel aufgewärmt in die Randzonen der Spritzstrahlen gelangen und so die Zündwilligkeit des Kraftstoff-Luftgemisches verbessern. Ausserdem dürfte die Geometrie und die gegenseitige Zuordnung der Teile nicht gewährleisten können, dass die Spritzstrahlen in jedem Betriebszustand der Maschine ohne Berührung der Glühwendel ungehindert durch diese hindurchtreten können.

Ferner sind Einrichtungen zum Einspritzen von Kraftstoff bekannt (FR-A 1 382 697), bei denen der Spritzöffnung der Einspritzdüse ein hülsenförmiger Glühkörper nachgeschaltet ist, durch den die Spritzstrahlen hindurchtreten. Bei diesen Einrichtungen ruft der Injektoreffekt des Spritzstrahls im Kanal des Glühkörpers einen starken Unterdruck hervor, der nicht kompensiert werden kann, weil seitliche Belüftungsöffnungen im Glühkörper nicht vorhanden sind bzw. ein Belüftungsspalt zwischen Einspritzdüse und Glühkörper fehlt. Statt dessen wird zwangsläufig periodisch Luft entgegen der Spritzstrahlrichtung einseitig am Spritzstrahl vorbei in den Kanal des Glühkörpers gedrückt, wobei Strahlrichtung, Strahlform und Strahlgeschwindigkeit sehr ungünstig beeinflusst werden. Der Spritzstrahl flattert und wird einseitig eingedrückt. Er verliert an Geschwindigkeit und wird schlecht im Brennraum verteilt. Das führt zu vermehrter Russemission und zu Leistungsverlusten.

Ferner sind Einspritzdüsen bekannt (US-A 1 693 931), die brennraumseitig ein Zylinderrohr tragen, welches eine der Spritzöffnung nachgeschaltete Brennkammer umschliesst, in welche Verbrennungsluft aus dem Motorzylinder über Wandöffnungen im Zylinderrohr seitlich eingesaugt wird. Das Zylinderrohr bildet ein passives Heizelement für die angesaugte Luft, die vor dem Eintritt in die Wandöffnungen des Zylinderrohrs an dessen Aussenfläche entlang strömt. Bei dieser Anordnung ist ein Glühkörper mit einem von elektrisch heizbaren Strukturen gebildeten Durchgang für die Spritzstrahlen nicht vorgesehen.

Bei Motoren mit Saugrohreinspritzung ist es bekannt, einer Einspritzdüse eine Katalysatorzündeinrichtung nachzuschalten, die mit einem von heizbaren Strukturen umgebenen Durchgang für die Spritzstrahlen versehen ist (DE-A 3 010 591). Bei dieser sich bereits gattungsmässig vom Gegenstand des Hauptanspruchs unterscheidenden Einrichtung wird der aus der Einspritzdüse austretende Kraftstoff bewusst und notwendigerweise gegen die einen Katalysator bildende Ringwand des Durchganges gerichtet und ausserdem wird durch seitliche Öffnungen Luft in den Durchgang eingeführt. Dazu ist ein äusserer Druckunterschied notwendig, weil ein Einsaugen der Luft durch Injektorwirkung wegen des Aufprallens der Spritzstrahlen auf die Ringwand des Durchganges und die dadurch hervorgerufene Verwirbelung im Durchgang nicht möglich ist. Bei dieser Einrichtung kann sich auch kein gezielter und eindeutig geformter Strahl in dem der Spritzöffnung nachgeschalteten Durchgang bilden.

Vorteile der Erfindung

Die erfindungsgemässen Anordnungen mit den kennzeichnenden Merkmalen der unabhängigen Patentansprüche 1 und 2 haben demgegenüber den Vorteil, dass sich die in den Kanal eingesaugte Luft erwärmt und in die Randzonen des Spritzstrahls eindringt, wo sich im Unterschied zu der Kernzone feinere Kraftstofftröpfchen befinden und ausserdem wegen kleinerer Tröpfchendichte als im Strahlkern ein für die Zündung und Verbrennung sehr günstiges Luft-Kraftstoffverhältnis herrscht. Beim Durchströmen des Kanals wird der Randzone des Spritzstrahls Wärme zugeführt, so dass bei Austreten des Spritzstrahls in den Brennraum die den Strahlkern umgebende Wolke aus Tröpfchen, Dampf und Luft zündet. Da diese Wolke anteilmässig nur einen geringeren Teil der Gesamtmenge im Spritzstrahl darstellt, erfordert die erfindungsgemässe Glüheinrichtung zur Einleitung der Zündung wesentlich weniger Heizenergie als die bekannten Einrichtungen der gattungsmässigen Art. Zusätzlich wird dabei die Eindringenergie des Spritzstrahls nicht gemindert, so dass sich der Spritzstrahl mit brennender Ummantelung im Brennraum ungehindert ausbreiten kann. Ferner kann eine Abbremsung des Spritzstrahls durch Unterdruckbildung und Strahlverformung im Kanal praktisch in allen Betriebspunkten der Brennkraftmaschine vermieden werden, so dass die Spritzstrahlen mit der gewünschten Geometrie und ungebremst mit maximaler Ausflussgeschwindigkeit aus dem Kanal austreten.

Durch die in den Unteransprüchen aufgeführten Merkmale sind vorteilhafte Weiterbildungen der Anordnungen nach den unabhängigen Patentansprüchen 1 und 2 möglich.

Besonders vorteilhaft ist es, wenn die Belüftungsleitung mit einem vom Kernbereich der Zündung abliegenden, zu Beginn der Verbrennung an Frischluft reichen Teil des Brennraums verbunden ist. Dadurch kann der dem Spritzstrahl im Glühkörper beigemischte Sauerstoffanteil erhöht und die Zündfreudigkeit des Kraftstoff-Luftgemisches weiter verbessert werden. In Brennkraftmaschinen, deren Brennraum in einen Haupt- und einen Nebenbrennraum unterteilt ist, wird die Belüftungsleitung zweckmässig mit dem Hauptbrennraum an bevorzugter Stelle verbunden. Ferner entfallen bei diesen Brennkraftmaschinen als Starthilfe dienende Glühkerzen bzw. -stifte, die erhebliche Strömungsverluste im Nebenbrennraum verursachen und die Russemission verstärken. Durch die erfindungsgemässen Anordnungen wird Leistung gewonnen und die Russemission reduziert.

Die Zündfreudigkeit des Kraftstoff-Luftgemisches kann weiter verbessert werden, wenn die Belüftungsleitung über ein elektrisches Heizelement führt.

Im Zuge der Belüftungsleitung können Belüftungsöffnungen unmittelbar im Glühkörper in Form von Wanddurchbrüchen, Kanälen usw. gebildet sein. In diesem Fall kann die eingesaugte Luft gezielt in bestimmte Randzonenbereiche der Spritzstrahlen eingeführt werden. Die Belüftungsleitung kann aber auch über einen zwischen der Stirnseite der Einspritzdüse und dem Glühkörper vorhandenen Ringspalt in den Kanal einmünden. In diesem Fall wird der Boden des Düsenkörpers durch die angesaugte Luft in definierter Weise beaufschlagt und von Fall zu Fall bei einer zur Minderung der Verkokung der Spritzöffnung dienlichen Temperatur gehalten.

Der Einspritzdüse kann ferner vorzugsweise ein Bauteil mit einem sich verengenden Kanal zum Hindurchtreten der Spritzstrahlen nachgeordnet sein, dessen engster Querschnitt dem Querschnittsprofil der Spritzstrahlen an dieser Stelle angepasst ist. Die Abstimmung mit der Grösse der seitlichen Belüftungsöffnungen und den anderen die Einspritzmenge und den Einspritzverlauf bestimmenden Parametern erfolgt zweckmässig so, dass mindestens annähernd über den gesamten Öffnungshub der Ventilnadel und in jedem Betriebspunkt der Brennkraftmaschine die Spritzstrahlen den engsten Querschnitt des Kanals gerade ausfüllen. Dadurch ist erreicht, dass während des Einspritzvorganges keine Verbrennungsgase an oder in den Drosselspalt der Einspritzdüse gelangen können. In der Schlussphase eines Einspritzvorganges können die Verbrennungsgase zwar in den Kanal eindringen, wobei jedoch mitgeführte Russteilchen entfernt von der Düsenöffnung der Einspritzdüse an den Wänden des Kanales abgelagert und im beheizten Zustand des Kanals wieder ausgedampft werden. Der Kanal übt so auch eine Schutzfunktion gegen Verkokung für die Düsenöffnung der Einspritzdüse aus. Die hindurchtretenden Spritzstrahlen benetzen äusserstenfalls nur leicht die den engsten Querschnitt umgebenden Wandbereiche des Kanals, so dass die Kohlenwasserstoff-Schademission in unbeheiztem Zustand des Kanals in tragbaren Grenzen bleibt.

Der sich verengende Kanal kann entweder unmittelbar im Glühkörper selbst oder in einem stromauf des Glühkörpers angeordneten gesonderten Bauteil vorgesehen sein, welches vorteilhaft als Hitzeschirm für die dem Glühkörper zugekehrten Bereiche der Einspritzdüse dient.

An den sich verengenden Abschnitt des Kanals kann sich in Strömungsrichtung ein sich erweiternder Abschnitt anschliessen, in dessen Bereich weitere Luft in die Spritzstrahlen des Kraftstoffs eingesaugt wird. Dieser Abschnitt kann vorzugsweise im Glühkörper gebildet sein und dessen Heizelemente tragen, so dass nur ein geringer Teil der Heizwärme zurück auf den Düsenkörper der Einspritzdüse und der grössere Teil auf den eingespritzten Kraftstoff abgestrahlt wird.

Die Hülse des Glühkörpers kann vorteilhaft aus Keramik bestehen und die heizbaren Strukturen können vorteilhaft durch einen auf die keramische Oberfläche aufgebrachten metallischen Schichtbelag gebildet sein. Der Schichtbelag kann bei gesteuertem Stromdurchgang kontrolliert zum Glühen gebracht werden. Ausserdem ist es möglich, einzelne Bereiche des Schichtbelags unabhängig von anderen Bereichen zu steuern und dadurch gezielt verschiedene Glühzustände hervorzurufen, um die Strahl- und Zündqualität an die Erfordernisse eines optimalen Betriebs im jeweiligen Betriebspunkt des Motors anzupassen.

Die heizbaren Strukturen des Glühkörpers können ferner durch eine Glühwendel gebildet sein, die in einem die Hülse bildenden keramischen Stützkörper eingebettet, vorzugsweise an wenigen Punkten in den Stützkörper eingesintert ist. Das hat den Vorteil, dass die Glühwendel selbst nicht formstabil sein muss und der Drahtquerschnitt der Glühwendel verkleinert werden kann. Dadurch ergeben sich geringere Aufheizströme und ausserdem sehr kurze Aufheizzeiten, d.h. eine Einsparung an Energie. Der keramische Stützkörper schirmt ferner die Glühwendel nach aussen elektrisch ab und kann ausserdem als Wärmespeicher bei längerem Glühen dienen.

Die Glühwendel kann vorteilhaft einen rechteckigen Drahtquerschnitt haben und der Draht der Glühwendel kann in Richtung seiner Längsachse zweckmässig gewellt sein. Dadurch wird eine grössere Leitungslänge und -oberfläche und eine Verkleinerung der Kontaktfläche der Glühwendel mit dem keramischen Stützkörper erzielt. Zur Fixierung der Glühwendel werden ihre Berührungspunkte mit dem Stützkörper vorteilhaft an diesen angesintert; infolge der Wellung des Drahtes der Glühwendel kann sich diese trotzdem frei dehnen und zusammenziehen. Eine andere Möglichkeit, die Glühwendel mit dem keramischen Stützkörper zu verbinden, besteht darin, dass die Glühwendel in eine Nut des noch ungesinterten Stützkörpers passend eingelegt und durch masslichen Schwund beim Sintern des Stützkörpers in der Nut eingeklemmt und radial nachgespannt ist.

Eine einfache Ausführung der Einspritzeinrichtung ergibt sich durch die Anordnung gemäss dem unabhängigen Anspruch 2, bei welcher der Glühkörper als formstabile Glühwendel ausgebildet ist.

Besonders vorteilhaft ist es, wenn die Glühwendel aus einem Mantelheizleiter gebildet ist. Dadurch erhält die Glühwendel bei gleichen äusseren Abmessungen einen höheren elektrischen Widerstand. Durch die rohrförmige Ausbildung wird ferner eine Einsparung an Edelmetall bzw. eine höhere mechanische Stabilität der Glühwendel erzielt. Im Bereich der Stromzuführung bilden sich kürzere kalte Zonen aus, wodurch sich eine bessere Wärmeverteilung ergibt.

Ein Düsenkörper einer gebräuchlichen Einspritzdüse kann praktisch ohne Abänderung übernommen werden, wenn der Glühkörper an der Düsenspannmutter befestigt ist, mit welcher der Düssenkörper am Düsenhalter festgespannt ist.

Der Glühkörper kann mit seiner Halterung auch als Einlegeteil ausgebildet und zwischen der Einspritzdüse und einer Schulter in der die Einspritzdüse aufnehmenden Gehäusebohrung festgespannt sein, wobei die Gestaltung der Stromzuführung auf verschiedene Weise ausgeführt werden kann.

Weitere vorteilhafte Konstruktionsmerkmale gehen aus den nachstehend beschriebenen Ausführungsbeispielen hervor.

Zeichnung

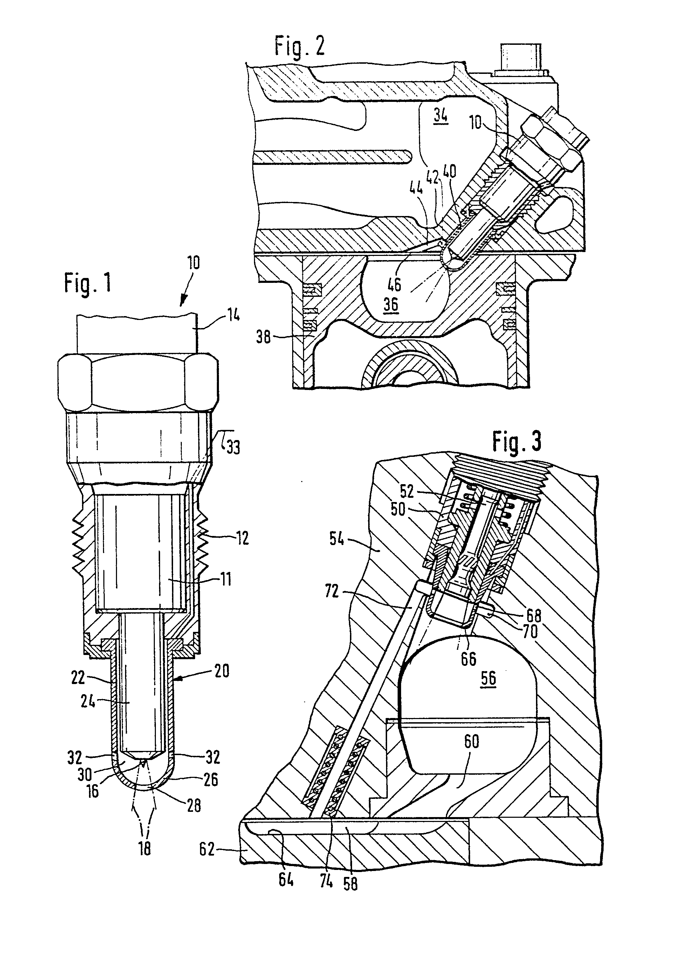

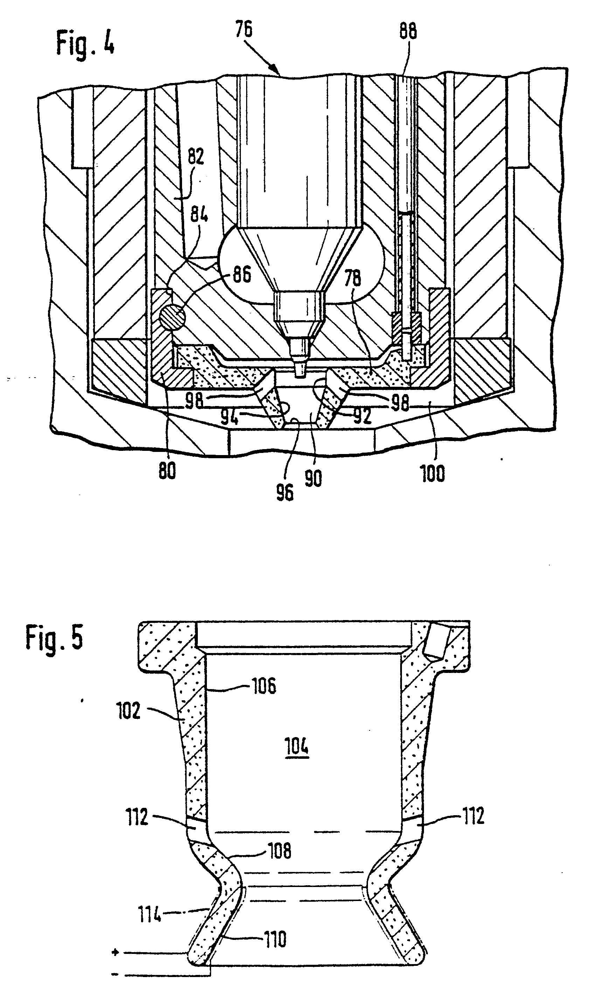

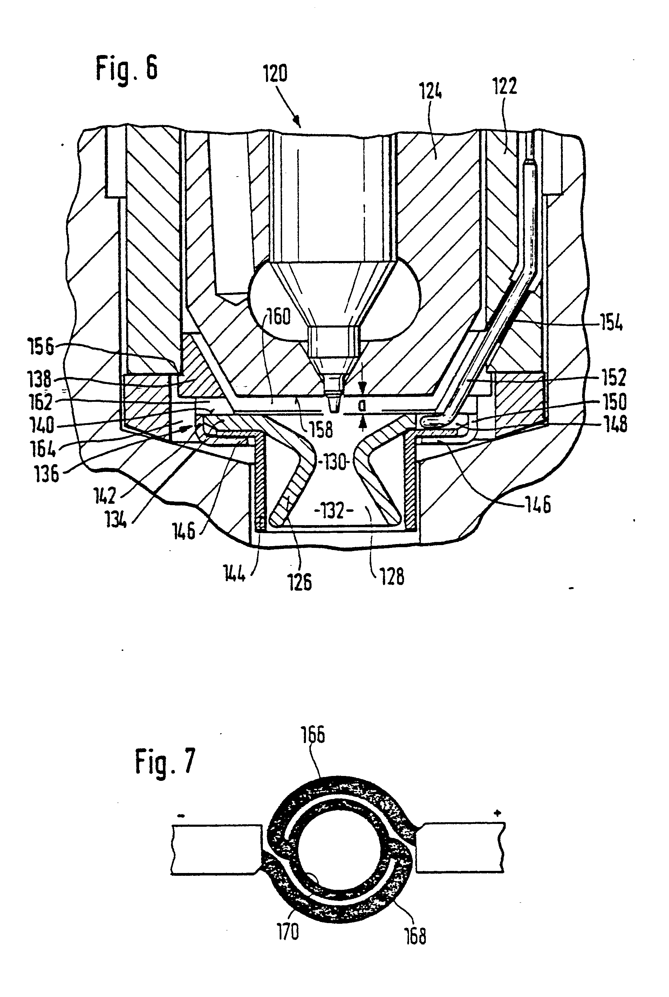

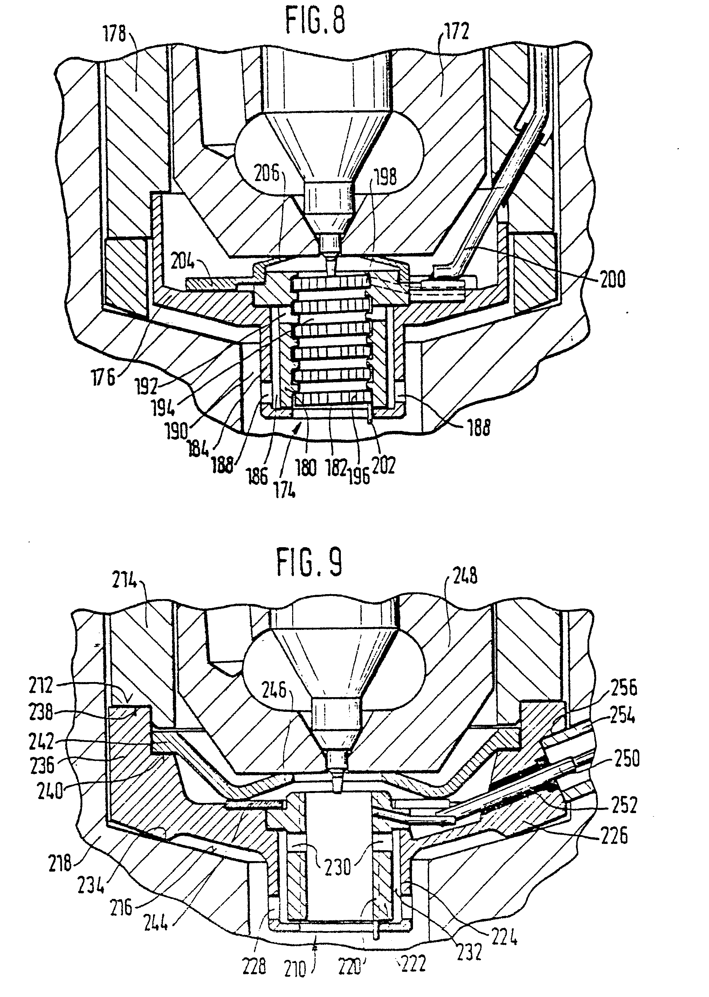

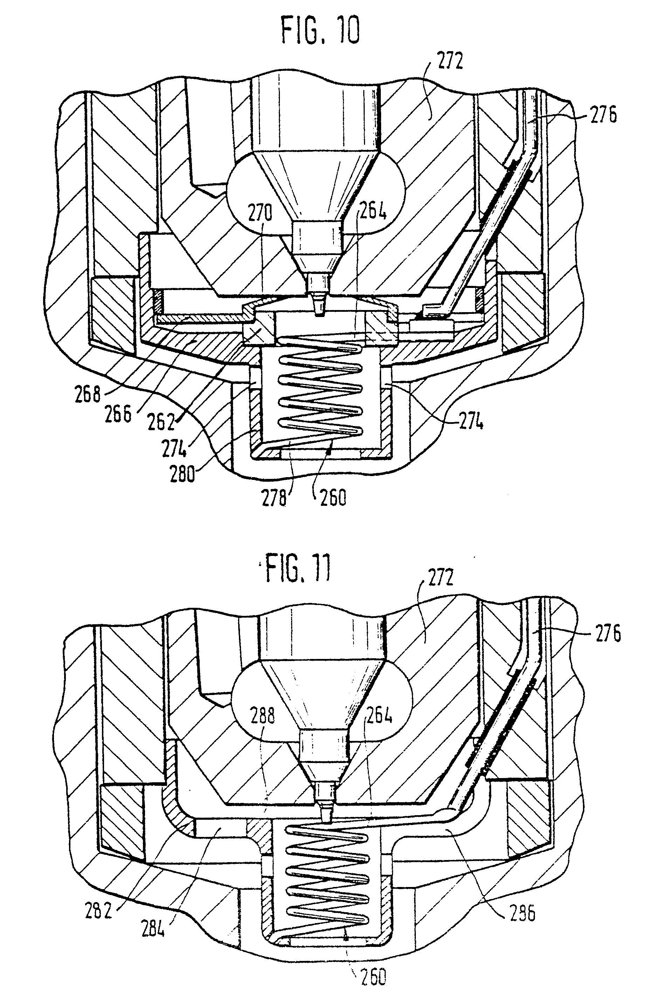

Sieben Ausführungsbeispiele der Erfindung sind in der Zeichnung dargestellt und in nachfolgender Beschreibung näher erläutert. Es zeigen Figur 1 den brennraumseitigen Teil einer Einspritzdüse nach einem ersten Ausführungsbeispiel in Seitenansicht und teilweise im Schnitt, Figur 2 einen Teilschnitt durch einen Dieselmotor mit einteiligem Brennraum und mit der Einspritzdüse nach Figur 1, Figur 3 als zweites Ausführungsbeispiel einen Teilschnitt durch einen Dieselmotor mit geteiltem Brennraum und einer nach aussen öffnenden Einspritzdüse, Figur 4 einen Teilschnitt durch das dritte Ausführungsbeispiel, Figur 5 einen abgewandelten Glühkörper der Einspritzdüse nach Figur 3 oder 4, Figur 6 einen Teilschnitt durch das vierte Ausführungsbeispiel, und Figur 7 ein Layout einer Heizvorrichtung für den Glühkörper nach den Figuren 4 bis 6. In den Figuren 8, 9 und 10 ist je ein Teilschnitt durch das fünfte, sechste und siebente Ausführungsbeispiel dargestellt. Figur 11 zeigt eine Abwandlung des Ausführungsbeispiels nach Figur 10.

Beschreibung der Ausführungsbeispiele

Die Einspritzdüse 10 nach Figur 1 hat einen Düsenkörper 11, der durch eine Überwurfmutter 12 an einem Düsenhalter 14 festgespannt ist. Die Teile 11 bis 14 sind handelsüblich und daher im einzelnen nicht gezeigt und beschrieben. Die Einspritzdüse 10 ist als Drosselzapfendüse ausgeführt, deren Ventilnadel einen aus dem Düsenkörper 11 herausragenden Drosselzapfen 16 trägt. Die Linien 18 deuten den Spritzkegel des Kraftstoff-Spritzstrahles an. Anstelle einer Drosselzapfendüse könnte auch eine Lochdüse vorgesehen sein.

An der Überwurfmutter 12 ist ein verhältnismässig dünnwandiger tubenförmiger Glühkörper 20 befestigt, dessen zylindrischer Mantelabschnitt 22 einen Schaft 24 des Düsenkörpers 11 mit engem Spiel umgibt. Der Boden 26 des Glühkörpers 20 ist sphärisch gewölbt und mit einer zentralen Bohrung 28 zum Durchtreten des Spritzkegels 18 versehen. Zwischen dem Boden 26 und der Stirnwand des Düsenkörpers 11 ist ein Kanal 30 gebildet, in welchen seitliche Öffnungen 32 im Glühkörper 20 einmünden. Der Glühkörper 20 trägt an seinem Boden 26 isoliert ein in der Zeichnung nicht sichtbares Heizelement, welches über einen elektrischen Anschluss 33 mit einer Stromquelle verbindbar ist.

Die Einspritzdüse 10 ist gemäss Figur 2 in den Zylinderkopf 34 eines Dieselmotors eingebaut, dessen Brennraum 36 im Kolben 38 gebildet ist. Der Glühkörper 20 ragt durch eine Bohrung 40 im Zylinderkopf 34 hindurch und ist im Bereich der Öffnungen 32 von einer Teilringnut 42 im Zylinderkopf 34 umgeben. Die Teilringnut 42 könnte gegebenenfalls durch eine entsprechend angeordnete Teilringnut im Kolben 38 zu einem den Glühkörper 20 in der oberen Totlage des Kolbens 38 vollständig umgebenden geschlossenen Ringnut ergänzt sein.

Die Teilringnut 42 ist über einen Kanal 44 im Zylinderkopf 34 mit dem Brennraum 36 an einer Stelle 46 verbunden, an welcher die Flammenfront erst nach einer gewissen Zeit nach dem Zünden des Gemisches ankommt.

Die aus der Einspritzdüse 10 austretenden Spritzstrahlen 18 saugen durch die seitlichen Öffnungen 32, die Teilringnut 42 und den Kanal 44 Luft aus dem Brennraum 36 an, die wegen der vorteilhaften Lage der Stelle 46 noch einen hohen Sauerstoffanteil hat. Die in den Kanal 30 angesaugte Luft erwärmt sich auf ein höheres Temperaturniveau als im übrigen Brennraum und dringt in die Randzone der Spritzstrahlen ein, wo sich ein für die Zündung und Verbrennung sehr günstiges Luft-Kraftstoffgemisch ergibt, das beim Austritt aus dem Kanal 30 und Eintritt in den Brennraum 36 sicher zündet.

Beim Ausführungsbeispiel nach Figur 3 ist eine Einspritzdüse 50 mit einer nach aussen öffnenden Ventilnadel 52 versehen, deren Aufbau ebenfalls bekannt ist und hier im einzelnen nicht beschrieben werden soll. Die Einspritzdüse 50 ist in den Zylinderkopf 54 eines Dieselmotors eingebaut, dessen Brennraum aus einem Nebenbrennraum 56 und einem Hauptbrennraum 58 besteht. Der Nebenbrennraum 56 ist im Zylinderkopf 54 gebildet und über eine Bohrung 60 mit dem Hauptbrennraum 58 verbunden, welcher sich in der oberen Totlage des Kolbens 62 zwischen dem Boden einer Ausnehmung 64 im Kolben 62 und dem Zylinderkopf 54 befindet.

Die Einspritzdüse 50 ist mit einem Glühkörper 66 versehen, welcher ähnlich wie jener nach Figur 1 ausgebildet und an der Einspritzdüse befestigt ist. Im Glühkörper 66 sind seitliche Öffnungen 68 vorgesehen, welche über eine Ringnut 70 und eine Bohrung 72 im Zylinderkopf 54 mit dem Hauptbrennraum 58 verbunden sind. Die Bohrung 72 führt durch ein elektrisches Heizelement 74, welches zum Vorheizen der in den Glühkörper 66 eingesaugten Luft dient. Durch diese Vorheizung wird die Zündfähigkeit des Kraftstoff-Luftgemisches weiter verbessert. Das Heizelement 74 kann parallel zu der Beheizung des Glühkörpers 66 geschaltet oder auch unabhängig von dieser gesteuert sein. Eine solche Vorheizung kann selbstverständlich auch im Kanal 46 des in Figur 2 dargestellten Brennraumes angebracht werden.

Beim Ausführungsbeispiel nach Figur 4 hat eine Einspritzdüse 76 einen flachen Glühkörper 78 aus keramischen Werkstoff, der durch einen Ringkörper 80 an der Stirnfläche eines Düsenkörpers 82 gehalten ist. Der Ringkörper 80 ist auf eine abgesetzte Ringfläche 84 des Düsenkörpers 82 aufgesteckt und durch einen Stift 86 am Düsenkörper 82 gehalten. Eine Anschlussleitung 88 für ein in der Zeichnung nicht sichtbares flächenhaftes Heizelement ist durch den Düsenkörper 82 der Einspritzdüse 76 hindurchgeführt, welche im übrigen den herkömmlichen Aufbau einer Drosselzapfendüse hat.

Der flache Glühkörper 78 nach Figur 4 enthält einen Kanal 90 zum Durchtritt der Spritzstrahlen, der einen zylindrischen Abschnitt 92 und daran anschliessend einen sich verengenden Abschnitt 94 hat, welcher an einer Ringkante 96 ausmündet. In den zylindrischen Abschnitt 92 münden seitliche Öffnungen 98 ein, welche diesen Abschnitt mit dem benachbarten Bereich 100 des Brennraums verbinden. Der sich verengende Abschnitt 94 hat den Vorteil, dass die Spritzstrahlen die Ringkante 96 des Glühkörpers 78 praktisch nicht benetzen und daher die Kohlenwasserstoff-Schademission bei unbeheiztem Glühkörper in tragbaren Grenzen bleibt.

In Figur 5 ist ein Glühkörper 102 aus keramischen Wirkstoff dargestellt, dessen Kanal 104 aus einem zylindrischen Abschnitt 106, einen sich verengenden Abschnitt 108 und daran anschliessend einen sich erweiternden Abschnitt 110 besteht. In den Kanal 104 münden seitliche Öffnungen 112 unmittelbar am Beginn des Abschnitts 108 ein, welcher dem Glühkörper 102 das gleiche vorteilhafte Verhalten bezüglich Schadstoffemission verleiht wie der Abschnitt 94 dem Glühkörper nach Figur 4. Im sich erweiternden Abschnitt 110 wird den Spritzstrahlen weitere aufgeheizte Luft beigemischt, was sich ebenfalls positiv auf die Zündfähigkeit des Gemisches auswirkt. Auf den Abschnitt 110 ist wie angedeutet innen und aussen eine Heizwicklung 114 in Form von flächenhaften Metallbelägen aufgebracht. Die Beschränkung der Heizwicklung 114 auf den Abschnitt 110 hat den Vorteil, dass nur ein geringer Teil der erzeugten Wärme auf die Einspritzdüse, der grösste Teil dagegen auf den Kraftstoffstrahl zurückgestrahlt wird.

Bei der Ausführung nach Figur 6 hat eine als Drosselzapfendüse ausgebildete Einspritzdüse 120 eine Überwurfmutter 122, welche einen Düsenkörper 124 gegen einen nicht dargestellten Düsenhalter presst. Dem Düsenkörper 124 ist ein elektrisch beheizter, keramischer Glühkörper 126 nachgeschaltet, der einen Kanal 128 enthält, durch welchen die Spritzstrahlen hindurchtreten. Der Kanal 128 hat einen sich verengenden ersten Abschnitt 130, an welchen sich ein sich erweiternder zweiter Abschnitt 132 anschliesst. Der engste Querschnitt des Kanals 128 ist so bemessen, dass bei allen Betriebspunkten des Motors die aus der Einspritzdüse austretenden Spritzstrahlen weitgehend berührungsfrei durch den Kanal 128 hindurchtreten.

Der Glühkörper 126 hat einen Ringflansch 134, der in einer als Ganzes mit der Bezugszahl 136 bezeichneten Halterung gefasst ist, über welche der Glühkörper 126 an der Überwurfmutter 122 befestigt ist. Die Halterung 136 hat einen Ringteil 138, der in die Überwurfmutter 122 eingepresst ist und das Stirnende des Düsenkörpers 124 mit Abstand umgibt. Der Ringteil 138 bildet eine axiale Schulter 140, auf welcher der Ringflansch 134 des Glühkörpers 126 aufliegt. Die Schulter 140 ist umgeben von einem an den Ringteil 138 angeformten Kragen 142, welcher den Ringflansch 134 mit engem Spiel umgibt und den Glühkörper 126 gegenüber der Achse des Düsenkörpers 124 zentriert. Am Ringflansch 134 liegt unten eine metallische Schutzhülse 144 an, welche den Glühkörper 126 mit radialem Spiel umgibt.

Der Kragen 142 der Halterung 136 ist mit einzelnen, gleichmässig über den Umfang verteilten Lappen 146 versehen, welche nach dem Einsetzen des Glühkörpers 126 und der Schutzhülse 144 in den Kragen 142 umgebördelt wurden, wonach sie die Teile schüttelfest und zentriert am Ringteil 138 festhalten. Die Bördelkraft ist so bemessen, dass der Glühkörper 126 mit Sicherheit nicht beschädigt wird.

Im Glühkörper 126 und der Halterung 136 sind miteinander korrespondierende Schlitze 148 und 150 gebildet, durch welche ein elektrischer Anschlussleiter 152 für ein am Glühkörper 126 angebrachtes, nicht näher dargestelltes elektrisches Heizelement hindurchgeführt ist. Das Heizelement kann zweckmässig in Form eines dünnen Metallbelags auf die Wand des Kanals 128 und gegebenenfalls auch auf den Aussenmantel des Glühkörpers 126 aufgebracht, z.B. aufgedampft sein. Der Anschlussleiter 152 ist durch eine Glaseinschmelzung 154 druckfest isoliert durch die Überwurfmutter 122 hindurch zu einem externen Anschlusskontakt geführt. Das zweite Anschlussende des Heizelementes ist über die Halterung 136 und die Überwurfmutter 122 mit Masse kontaktiert.

Der Ringteil 138 hat am Aussenumfang eine Schulter 156, welche sicherstellt, dass die andere Schulter 140 des Ringteils 138 und damit der Glühkörper 126 einen definierten Abstand a zur benachbarten Stirnfläche 158 des Düsenkörpers 124 haben. Dadurch ist ein Ringraum 160 zwischen Düsenkörper 124 und Glühkörper 126 gebildet, welcher über mehrere Bohrungen 162 im Ringteil 138 mit einer Vorkammer 164 des Brennraums der Maschine verbunden ist.

In Figur 7 ist gezeigt, wie ein Heizelement für einen der in den Figuren 4 bis 6 dargestellten Glühkörper vorteilhaft ausgelegt sein kann, um alle für die Beheizung geeigneten Bereiche des Glühkörpers zu erfassen. Das Heizelement hat nach diesem Vorschlag zwei Leiterstränge 166, 168, die auf einer den Kanal für die Spritzstrahlen umgebenden äusseren Mantelfläche des Glühkörpers anzubringen sind. Die Leiterstränge 166, 168 können dabei auf verschiedenen Abschnitten der Mantelfläche aufgebracht oder beispielsweise nach Art einer bifilaren Wicklung ineinander geschachtelt die gesamte zu beheizende Mantelfläche des Glühkörpers bedecken. Jeder Leiterstrang 166, 168 ist an einem Ende mit einem äusseren Anschluss Plus bzw. Minus und am anderen Ende mit einem Leiterstrang 170 verbunden, welcher die gesamte zu beheizende Fläche an der Wand des Kraftstoffkanals gleichmässig bedeckt. Die Anschlüsse der Leiterstränge 166, 168 an den inneren Leiterstrang 170 sind so gewählt, dass sich zwei parallele Zweige des inneren Leiterstranges 170 ergeben, die etwa den gleichen elektrischen Widerstand haben.

Beim Ausführungsbeispiel nach Figur 8 ist einem Düsenkörper 172 der Einspritzdüse eine Baueinheit 174 nachgeschaltet, welche als tragenden Grundbauteil einen metallischen Flanschring 176 hat, der an einer Überwurfmutter 178 befestigt ist. Im Flanschring 176 ist ein buchsenförmiger keramischer Stützkörper 180 für eine Glühwendel 182 befestigt, welche in die Wand der zentralen Innenbohrung des Stützkörpers 180 eingebettet ist. Der Stützkörper 180 ist mit Abstand von einer metallischen Schutzhülse 184 umgeben, die einstückig an den Flanschring 176 angeformt ist. Zwischen Stützkörper 180 und Schutzhülse 184 ist ein ringförmiger Zwischenraum 186 gebildet, der über Bohrungen 188 in der Schutzhülse 184 mit einer Vorkammer 190 des Brennraums und über Bohrungen 192 im Stützkörper 180 sowie den Spalt 194 zwischen den Windungen der Glühwendel 182 mit dem Inneren der Glühwendel 182 verbunden ist. Die Bohrungspaare 188 und 192 können in Abweichung zur Zeichnung radial zueinander versetzt angeordnet sein.

Die Glühwendel 182 selbst ist aus einem Draht mit rechteckigem Querschnitt geformt, der entlang seiner Längsachse gewellt ist, wie in Figur 8 die senkrechten Schattenlinien 196 zeigen. Die radial nach aussen weisenden Wellenberge des Glühwendeldrahtes berühren die Bohrungswand des Stützkörpers 180; an den Berührungspunkten ist die Glühwendel 182 mit dem Stützkörper 180 zweckmässig durch Sintern verbunden. Der Stützkörper 180 besitzt eine schraubenförmige Rechtecknut, in welche die Glühwendel 182 passend eingelegt wird, wenn die Keramik sich noch im «grünen», d.h. ungesinterten Zustand befindet. Beim Sintern wird infolge des masslichen Schwundes der Keramik die Glühwendel 182 an den Längskanten in der Nut eingeklemmt und gleichzeitig auch radial nachgespannt.

Das eine Anschlussende 198 der Glühwendel 182 ist über einen isoliert durch die Überwurfmutter 178 hindurchgeführten Leiter 200 mit einem externen Anschlusskontakt verbunden, wogegen das andere Anschlussende 202 über die Schutzhülse 184, den Flanschring 176 und die Überwurfmutter 178 an Masse angeschlossen ist. Am Flanschring 176 ist ein Wärmeschutzring 204 befestigt, der mit einer Ringlippe 206 versehen ist, welche fest und dicht gegen die benachbarte Stirnseite des Düsenkörpers 172 drückt. Der Wärmeschutzring 204 dient gleichzeitig zum Festhalten des keramischen Stützkörpers 180 im Flanschring 176.

Die Einrichtung nach Figur 8 hat den Vorteil, dass die Glühwendel 182 elektrisch isoliert und vor Beschädigungen geschützt in einer vorgefertigten Baueinheit 174 eingebettet ist. Die Glühwendel 182 kann daher aus einem ziemlich dünnen Draht bestehen, so dass geringe Heizströme und kurze Aufheizzeiten möglich sind. Der keramische Stützkörper 180 kann darüber hinaus als Wärmespeicher bei längeren Glühungen dienen. Durch den rechteckigen Drahtquerdurchschnitt ergibt sich gegenüber einem Kreisquerschnitt bei gleicher Masse eine grössere Oberfläche des Glühwendeldrahtes. Durch dessen Wellungen und die örtlichen Verbindungsstellen mit dem Stützkörper 180 lässt sich auf gleichem Raum eine grössere Drahtlänge unterbringen und die unterschiedlichen Wärmedehnungen der beiden Materialien ausgleichen. Durch die örtlichen Berührungen der Glühwendel 182 mit dem Stützkörper 180 wird der Wärmefluss zum Stützkörper 180 stark gedrosselt und das Hochheizen der Glühwendel 182 weiter beschleunigt. Über den Flanschring 176 bzw. den Wärmeschutzring 204 wird die vom Brennraum bzw. von der Glühwendel 182 gegen die Einspritzdüse gestrahlte Hitze von deren Spritzöffnung weg- und auf die Überwurfmutter 178 abgeleitet. Durch die axiale und vorzugsweise auch radiale Versetzung der Bohrungspaare 188, 192 im Stützkörper 180 wird die angesaugte Luft über grössere Flächenbereiche des Stützkörpers 180 geführt. Dadurch wird ein guter Wärmeaustausch zwischen der angesaugten Luft und dem Stützkörper 180 und eine gute Vorheizung der Luft erzielt. Die beschriebene Anordnung hat ferner den Vorteil, dass Risse im keramischen Stützkörper 180 noch nicht zwangsläufig zum Ausfall des gesamten Glühvorsatzes führen.

Als Material für die Glühwendel 182 hat sich eine feinkornstabilisierte Platinlegierung als vorteilhaft erwiesen, welche max. 79% Platin, max. 40% Rhodium, und nicht mehr als 1% Iridium enthält. Eine solche Legierung hat einen hohen Schmelzpunkt, eine grosse mechanische Festigkeit und eine hohe chemische Beständigkeit.

Beim Ausführungsbeispiel nach Figur 9 ist ein als Baueinheit vorgefertigter Glühvorsatz 210 als Einlegeteil ausgebildet, welches zwischen einer Stirnfläche 212 einer Überwurfmutter 214 der Einspritzdüse und einer Ringschulter 216 in der Einbauöffnung des Motorgehäuses 218 eingespannt ist. Der Glühvorsatz 210 hat wie die Ausführung nach Figur 8 einen dünnwandigen metallischen Glühkörper 220, der in einen keramischen Stützkörper 222 eingebettet ist. Dieser ist von einer metallischen Schutzhülse 224 mit Radialspiel umgeben, welche einstückig mit einem Flanschring 226 verbunden ist. Zur Führung der angesaugten Luft dienen auch hier Bohrungen 228, 230 in der Schutzhülse 224 und dem Stützkörper 222, sowie der zwischen diesen Teilen vorhandene Ringraum 232.

Der Flanschring 226 hat eine schneidenförmige Dichtkante 234, welche auf den Ringschulter 216 aufliegt und die Einbauöffnung nach aussen dichtet. Der Flanschring 226 hat ferner einen hochgezogenen Rand 236, welcher eine mit der Stirnfläche 212 der Überwurfmutter 214 korrespondierende ebene Dichtfläche 238 und eine dazu abgesetzte Auflagefläche 240 für einen Wärmeschutzring 242 hat. Dieser drückt gegen eine den Stützkörper 222 im Flanschring 226 festhaltende Platte 244 und ist mit einer Ringlippe 246 versehen, welche mit elastischer Spannung an der Stirnseite eines Düsenkörpers 248 anliegt. Der Wärmeschutzring 242 ist am Flanschring 226 befestigt und am äusseren Ringrand so bemessen, dass er das Aufsetzen der Überwurfmutter 214 auf die Dichtfläche 238 nicht behindert.

Der Glühkörper 220 ist mit einem elektrischen Anschlussleiter 250 verbunden, welcher durch eine Glaseinschmelzung 252 druckfest isoliert durch den Flanschring 226 hindurch in ein formsteifes Schutzrohr 254 geführt ist. Dieses ist in eine von aussen zugängliche Bohrung des Motorgehäuses 218 eingesteckt und greift in eine örtliche Vertiefung 256 am Umfang des Flanschringes 226 ein. Beim Zusammenbau der Teile wird erst der vorgefertigte Glühvorsatz 210 schräg in die Einbauöffnung eingesetzt und dabei der Anschlussleiter 250 durch die für das Schutzrohr 254 vorgesehene Bohrung im Motorgehäuse 218 hindurchgezogen. Danach wird das Schutzrohr 254 eingesteckt, welches als Verdrehsicherung für den Glühvorsatz 210 beim Einschrauben der Einspritzdüse und als Schutz gegen Abscheren des Anschlussleiters 250 dient.

Die Ausbildung des Glühvorsatzes als Einlegeteil bietet den Motorkonstrukteuren bei der Gestaltung von Brennräumen und des gesamten Motorgehäuses bzw. Zylinderkopfes mehr Flexibilität.

Das Ausführungsbeispiel nach Figur 10 unterscheidet sich vom Ausführungsbeispiel nach Figur 8 dadurch, dass eine eigenstabile Glühwendel 260 vorgesehen ist, die ohne keramischen Stützkörper auskommt. Dieser ist durch einen keramischen Ringkörper 262 ersetzt, durch welchen das eine Drahtende 264 der Glühwendel 260 hindurchgeführt ist. Zum Festhalten des keramischen Ringkörpers 262 an einem metallischen Flanschring 266 ist eine federnde Metallscheibe 268 vorgesehen, an der eine Ringlippe 270 gebildet ist, welche an einem Düsenkörper 272 mit Vorspannung anliegt und von diesem die Wärme ableitet. Der Flanschring 266 stimmt im wesentlichen bis auf eine andere axiale Lage von seitlichen Belüftungsöffnungen 274 mit dem Flanschring 166 nach Figur 8 überein und übt auch die gleiche Funktion wie dieser aus. Das obere Drahtende 264 der Glühwendel 260 ist mit einem weiterführenden Anschlussleiter 276 verbunden, während das untere Drahtende 278 in einer Bohrung eines die Glühwendel 260 schützend umgebenden Ansatzes 280 des Flanschrings 266 befestigt ist.

Die Ausführung nach Figur 10 hat den Vorteil eines besonders grossen seitlichen Belüftungsquerschnitts, durch den die Spritzstrahlen des Kraftstoffs einen hohen Luftanteil ansaugen.

Die in Figur 11 dargestellte Variante weicht von der Ausführung nach Figur 10 im wesentlichen dadurch ab, dass ein Wärmeschutz für den Düsenkörper 272 nicht vorgesehen ist. Das obere Drahtende 264 der Glühwendel 260 ist unmittelbar mit dem Anschlussleiter 276 verbunden, und ein Flanschring 282 ist mit mehreren Durchbrüchen 284, 286 versehen, durch welche Luft aus dem Brennraum in einen Ringspalt 288 zwischen Flanschring 282 und Düsenkörper 272 und von dort in die Spritzstrahlen gelangen kann. Diese Ausführung empfiehlt sich in einem Fall, wo der Kühlungseffekt der über die Stirnseite des Düsenkörpers 272 strömenden Luft die Hitzeeinwirkung vom Brennraum und von der Glühwendel 260 überwiegt.

Bei den Ausführungen nach den Figuren 10 und 11 könnte die Glühwendel 260 auch durch einen Rohrheizleiter gebildet sein. Dadurch erhält die Glühwendel 260 bei gleichen äusseren Abmessungen einen höheren elektrischen Widerstand. Durch die rohrförmige Ausbildung wird ferner eine Einsparung an Edelmetall bzw. eine höhere mechanische Stabilität der Glühwendel erzielt. Im Bereich der Stromzuführung bilden sich kürzere kalte Zonen aus, wodurch sich eine bessere Wärmeverteilung ergibt.

**Patentansprüche**

1. Einrichtung zum Einspritzen von Kraftstoff in den Brennraum von selbstzündenden Brennkraftmaschinen, mit einer Einspritzdüse (10), einem der Spritzöffnung der Einspritzdüse (10) nachgeschalteten Glühkörper (20), der einen von elektrisch heizbaren Strukturen umgebenen mittigen Durchgang (28) für den Kraftstoffeinspritzstrahl hat, und ferner mit einem der Spritzöffnung der Einspritzdüse (10) zentrisch nachgeordneten, zum Brennraum hin führenden Kanal, in den eine mit dem Brennraum verbundene Belüftungsleitung (32) von der Seite her einmündet, durch welche der Einspritzstrahl infolge Injektorwirkung Luft aus dem Brennraum ansaugt, gekennzeichnet durch folgende Merkmale:
a) der Glühkörper weist eine mit den heizbaren Strukturen versehene Hülse (26) auf, die den Kanal (30) wenigstens teilweise bildet,
b) die Hülse (26) ist so bemessen, dass der Einspritzstrahl im wesentlichen berührungsfrei durch den Kanal (30) und den Durchgang (28) hindurchgeht,
c) die seitliche Belüftungsleitung (32) mündet stromauf des brennraumseitigen Austritts des Durchganges (28) des Glühkörpers über den Umfang des Kanals verteilt in diesen ein und

d) die injizierte Luft gelangt durch den Glühkörper (20) aufgeheizt allseitig in die Randzonen des Einspritzstrahles.

2. Einrichtung zum Einspritzen von Kraftstoff in den Brennraum von selbstzündenden Brennkraftmaschinen, mit einer Einspritzdüse, einer der Spritzöffnung der Einspritzdüse nachgeschalteten Glühwendel (260), die einen mittigen Durchgang für den Kraftstoffeinspritzstrahl hat, und ferner mit einem der Spritzöffnung der Einspritzdüse zentrisch nachgeordneten, zum Brennraum führenden Kanal, in dem die Glühwendel angeordnet ist und in den eine mit dem Brennraum verbundene Belüftungsleitung (274) von der Seite her einmündet, durch welche der Einspritzstrahl infolge Injektorwirkung Luft aus dem Brennraum ansaugt, gekennzeichnet durch folgende Merkmale:
a) die Glühwendel ist mit radialem Abstand von einer im wesentlichen den Kanal bildenden Hülse (280) umgeben, die mit einer in den Brennraum führendenk Bohrung des Zylinderkopfes einen Ringraum begrenzt,
b) die Glühwendel und die Hülse sind so bemessen, dass der Einspritzstrahl im wesentlichen berührungsfrei durch den Durchgang der Glühwendel (260) und den Kanal hindurchgeht,
c) die seitliche Belüftungsleitung (274) mündet stromauf des brennraumseitigen Austritts des Durchganges der Glühwendel über den Umfang des Kanals verteilt in diesen ein und
d) die injizierte Luft gelangt durch die Glühwendel (260) aufgeheizt allseitig in die Randzonen des Einspritzstrahles.

3. Einrichtung nach Anspruch 1, dadurch gekennzeichnet, dass die Belüftungsleitung (32) mit einem vom Kernbereich der Zündung abliegenden Bereich (46) des Brennraums verbunden ist.

4. Einrichtung nach Anspruch 3, zum Einspritzen von Kraftstoff in Brennräume, die in einen Nebenbrennraum und einen Hauptbrennraum geteilt sind, dadurch gekennzeichnet, dass die Belüftungsleitung (68) mit dem Hauptbrennraum (58) verbunden ist.

5. Einrichtung nach Anspruch 3 oder 4, dadurch gekennzeichnet, dass die Belüftungsleitung (68, 72) über ein elektrisches Heizelement (74) führt.

6. Einrichtung nach Anspruch 1, dadurch gekennzeichnet, dass seitliche Belüftungsöffnungen (98) im Glühkörper (78) in Form von Wanddurchbrüchen, die radial oder tangential zum Kanal verlaufen, gebildet sind.

7. Einrichtung nach Anspruch 1, dadurch gekennzeichnet, dass die Belüftungsleitung über einen zwischen der Stirnseite der Einspritzdüse und dem Glühkörper (126) vorhandenen Ringspalt (160) in den Kanal einmündet.

8. Einrichtung nach Anspruch 1, dadurch gekennzeichnet, dass der Kanal einen sich in Strömungsrichtung verengenden Abschnitt aufweist.

9. Einrichtung nach Anspruch 8, dadurch gekennzeichnet, dass sich an den sich verengenden Abschnitt (108) des Kanals in Strömungsrichtung ein sich erweiternder Abschnitt (110) anschliesst, der die heizbaren Strukturen des Glühkörpers (102) trägt.

10. Einrichtung nach Anspruch 8, dadurch gekennzeichnet, dass der sich verengende Abschnitt des Kanals in einem zwischen der Einspritzdüse und dem Glühkörper angeordneten Hitzeschirm gebildet ist.

11. Einrichtung nach Anspruch 1, dadurch gekennzeichnet, dass die Hülse des Glühkörpers aus Keramik besteht und die heizbaren Strukturen durch einen auf die keramische Oberfläche aufgebrachten metallischen Schichtbelag gebildet sind.

12. Einrichtung nach Anspruch 1, dadurch gekennzeichnet, dass die heizbaren Strukturen des Glühkörpers durch eine Glühwendel (182) gebildet sind, die in einem die Hülse bildenden keramischen Stützkörper (180) eingebettet, vorzugsweise eingesintert ist.

13. Einrichtung nach Anspruch 12, dadurch gekennzeichnet, dass die Glühwendel (182) einen rechteckigen Drahtquerschnitt hat.

14. Einrichtung nach Anspruch 12, dadurch gekennzeichnet, dass der Draht der Glühwendel (182) in Richtung seiner Längsachse gewellt ist.

15. Einrichtung nach Anspruch 2 oder 12, dadurch gekennzeichnet, dass das Material der Glühwendel (260, 182) aus einer feinkornstabilisierten Platin-Legierung besteht, welche maximal 79% Platin, maximal 40% Rhodium, und nicht mehr als 1% Iridium enthält.

16. Einrichtung nach Anspruch 2, dadurch gekennzeichnet, dass die Glühwendel (260) aus einem Mantelheizleiter gebildet ist.

17. Einrichtung nach Anspruch 1 oder 2, dadurch gekennzeichnet, dass der Glühkörper (220) mit seiner Halterung (226) als Einlegeteil ausgebildet und zwischen der Einspritzdüse und einer Schulter (216) in der die Einspritzdüse aufnehmenden Gehäusebohrung festgespannt ist.

18. Einrichtung nach Anspruch 1 oder 2, mit einem Düsenkörper, welcher durch eine Überwurfmutter an einem Düsenhalter befestigt ist, dadurch gekennzeichnet, dass der Glühkörper (20) mit seiner Halterung an der vom Düsenhalter abgekehrten Stirnseite der Überwurfmutter (12) befestigt ist.

19. Einrichtung nach Anspruch 1, dadurch gekennzeichnet, dass zum Halten und Zentrieren des Glühkörpers (182) ein Flanschring (176) dient, welcher die dem Glühkörper zugekehrte Stirnseite der Einspritzdüse mindestens teilweise gegenüber dem Brennraum abschirmt.

20. Einrichtung nach Anspruch 2, dadurch gekennzeichnet, dass die Hülse mit einem Flanschring (266) verbunden ist, welcher die Einspritzdüse mindestens teilweise gegenüber dem Brennraum abschirmt und als Halterung für die Hülse und die Glühwendel (260) dient.

21. Einrichtung nach einem der Ansprüche 19 oder 20, dadurch gekennzeichnet, dass am Flanschring (176) ein aus gut wärmeleitendem Material bestehender Wärmeschutzring (204) befestigt ist, welcher eine Ringlippe (206) hat, die auf der zugekehrten Stirnfläche des Düsenkörpers (172) der Einspritzdüse aufliegt.

22. Einrichtung nach einem der vorhergehenden Ansprüche, dadurch gekennzeichnet, dass eine elektrische Zuleitung (152) durch einen Kanal in der Einspritzdüse hindurchgeführt ist und der Spalt zwischen Zuleitung und Kanalwand mit einer Glaseinschmelzung (154) druckfest gedichtet ist.

**Claims**

1. Device for injecting fuel into the combustion chamber of self-igniting internal-combustion engines, having an injection nozzle (10), a glow element (20) arranged behind the spray orifice of the injection nozzle (10), which has a central passage (28) surrounded by electrically heatable structures for the fuel injection stream, and further having a duct arranged centrally behind the spray orifice of the injection nozzle (10) and leading towards the combustion chamber, into which a ventilation pipe (32) connected to the combustion chamber leads from the side, through which the injection stream sucks air out of the combustion chamber by injector effect, characterized by the following features:

a) the glow element exhibits a sleeve (26) provided with the heatable structures which at least partly forms the duct (30),

b) the sleeve (26) is dimensioned so that the injection stream passes substantially contactlessly through the duct (30) and the passage (28),

c) the lateral ventilation pipe (32) leads into the duct distributed over the circumference thereof upstream of the combustion chamber-side exit of the passage (28) of the glow element and

d) the injected air, heated by the glow element (20), enters the peripheral regions of the injection stream on all sides.

2. Device for injecting fuel into the combustion chamber of self-igniting internal-combustion engines, having an injection nozzle, a glow coil (260) arranged behind the spray orifice of the injection nozzle, which has a central passage for the fuel injection stream, and further having a duct arranged centrally behind the spray orifice of the injection nozzle and leading to the combustion chamber, wherein the glow coil is arranged and into which a ventilation pipe (274) connected to the combustion chamber leads from the side, through which the injection stream sucks air out of the combustion chamber by injector effect, characterized by the following features:

a) the glow coil is surrounded at a radial interval by a sleeve (280) substantially forming the duct, which delimits an annular space with a bore of the cylinder head leading into the combustion chamber,

b) the glow coil and the sleeve are dimensioned so that the injection stream passes substantially contactlessly through the passage of the glow coil (260) and the duct,

c) the lateral ventilation pipe (274) leads into the duct distributed over the circumference thereof upstream of the combustion chamber-side exit of the passage of the glow coil and

d) the injected air, heated by the glow coil (260), enters the peripheral regions of the injection stream on all sides.

3. Device according to Claim 1, characterized in that the ventilation pipe (32) is connected to a region (46) of the combustion chamber remote from the central region of the ignition.

4. Device according to Claim 3 for injecting fuel into combustion chambers which are divided into a secondary combustion chamber and a main combustion chamber, characterized in that the ventilation pipe (68) is connected to the main combustion chamber (58).

5. Device according to Claim 3 or 4, characterized in that the ventilation pipe (68, 72) leads through an electrical heating element (74).

6. Device according to Claim 1, characterized in that lateral ventilation orifices (98) in the glow element (78) are formed in the form of wall perforations which extend radially or tangentially to the duct.

7. Device according to Claim 1, characterized in that the ventilation pipe leads into the duct through an annular gap (160) present between the end face of the injection nozzle and the glow element (126).

8. Device according to claim 1, characterized in that the duct exhibits a section convergent in the flow direction.

9. Device according to Claim 8, characterized in that the convergent section (108) of the duct is followed in the flow direction by a divergent section (110) which carries the heatable structures of the glow element (102).

10. Device according to Claim 8, characterized in that the convergent section of the duct is formed in a heat shield arranged between the injection nozzle and the glow element.

11. Device according to Claim 1, characterized in that the sleeve of the glow element consists of ceramic and the heatable structures are formed by a metallic layer coating applied onto the ceramic surface.

12. Device according to Claim 1, characterized in that the heatable structures of the glow element are formed by a glow coil (182) which is embedded, preferably sintered, in a ceramic support element (180) forming the sleeve.

13. Device according to Claim 12, characterized in that the glow coil (182) has a rectangular wire cross-section.

14. Device according to Claim 12, characterized in that the wire of the glow coil (182) is undulated in the direction of its longitudinal axis.

15. Device according to Claim 2 or 12, characterized in that the material of the glow coil (260, 182) consists of a fine-grain stabilized platinum alloy which contains a maximum of 79% platinum, maximum 40% rhodium and not more than 1% iridium.

16. Device according to Claim 2, characterized in that the glow coil (260) is formed by a jacket heating conductor.

17. Device according to Claim 1 or 2, characterized in that the glow element (220) with its support means (226) is constructed as an insert part and is clamped between the injection nozzle and a shoulder (216) in the housing bore receiving the injection nozzle.

18. Device according to Claim 1 or 2, having a nozzle element which is fastened by a check nut to a nozzle holder, characterized in that the glow element (20) with its support means is fastened to the end face of the check nut (12) remote from the nozzle holder.

19. Device according to Claim 1, characterized in that a flange ring (176), which serves to retain and centre the glow element (182), shields the end face of the injection nozzle facing the glow element at least partially from the combustion chamber.

20. Device according to Claim 2, characterized in that the sleeve is connected to a flange ring (266) which shields the injection nozzle at least partially from the combustion chamber and serves as a support means for the sleeve and the glow coil (260).

21. Device according to either Claim 19 or 20, characterized in that a thermal protection ring (204) consisting of highly thermally conductive material, which is fastened to the flange ring (176), has an annular lip (206) which rests upon the facing end face of the nozzle element (172) of the injection nozzle.

22. Device according to any of the previous Claims, characterized in that an electrical supply conductor (152) is passed through a duct in the injection nozzle and the gap between supply conductor and duct wall is dealed pressure-tightly with a glass fusion (154).

**Revendications**

1. Dispositif pour l'injection de carburant dans la chambre de combustion de moteurs à combustion interne à auto-allumage, commportant un injecteur (10), un corps incandescent (20) monté à la suite de l'orifice d'injection de l'injecteur (10) et pourvu pour le jet d'injection de carburant d'un passage central (28) entouré par des structures chauffables électriquement, et comportant en outre un canal ménagé en position centrale à la suite de l'orifice d'injection de l'injecteur (10) et menant à la chambre de combustion, et dans lequel débouche, depuis le côté, une conduite d'aération (32) reliée à la chambre de combustion, et par laquelle le jet d'injection, par suite d'une action d'injecteur, aspire de l'air de la chambre de combustion, dispositif caractérisé en ce que:
a) le corps incandescent comporte un manchon (26) pourvu des structures chauffables, et qui forment au moins partiellement le canal (30),
b) le manchon (26) est dimensionné de manière que le jet d'injection passe essentiellement sans contact par le canal (30) et le passage (28),
c) la conduite d'aération (32) latérale débouche – en amont de la sortie du passage (28) du corps incandescent située du côté de la chambre de combustion – dans le canal, en étant réparties sur le pourtour de celui-ci, et
d) l'air injecté arrive chauffé par le corps incandescent (20) de tous côtés dans les zones de bord du jet d'injection.

2. Dispositif pour l'injection de carburant dans la chambre de combustion de moteurs à combustion interne à allumage spontané comportant un injecteur, un filament en spirale incandescent (260) monté à la suite de l'orifice d'injection de l'injecteur et pourvu d'un passage central pour le jet d'injection de carburant, et comportant en outre un canal ménagé en position centrale à la suite de l'orifice d'injection de l'injecteur et menant à la chambre de combustion, canal dans lequel est disposé le filament en spirale incandescent et dans lequel débouche depuis le côté une conduite d'aération (274), reliée à la chambre de combustion, et par laquelle le jet d'injection, par suite d'une action d'injecteur, aspire de l'air de la chambre de combustion, dispositif caractérisé en ce que:
a) le filament en spirale incandescent est entouré à distance radiale par un manchon (280) formant essentiellement le canal, et qui délimite une chambre annulaire avec un alésage de la tête de cylindre menant dans la chambre de combustion,
b) le filament en spirale incandescent et le manchon sont dimensionnés de manière que le jet d'injection passe essentiellement sans contact par le passage du filament en spirale incandescent (260) et le canal,
c) la conduite d'aération (274) latérale débouche – en amont de la sortie du passage du filament en spirale incandescent située du côté de la chambre de combustion – dans le canal, en étant répartie sur le pourtour de celui-ci, et
d) l'air injecté arrive chauffé par le filament en spirale incandescent (260) de tous côtés dans les zones de bord du jet d'injection.

3. Dispositif selon la revendication 3, caractérisé en ce que la conduite d'aération (32) est reliée à une zone (46) de la chambre de combustion située hors de la zone centrale de l'allumage.

4. Dispositif selon la revendication 1, pour l'injection de carburant dans des chambres de combustion qui sont divisées en une chambre de combustion auxiliaire et une chambre de combustion principale, caractérisé en ce que la conduite d'aération (68) est reliée à la chambre de combustion principale (58).

5. Dispositif selon la revendication 3 ou 4, caractérisé en ce que la conduite d'aération (68, 72) passe à travers un élément chauffant électrique (74).

6. Dispositif selon la revendication 1, caractérisé en ce que des orifices d'aération latéraux (98) sont formés, dans le corps incandescent (78), sous la forme de percements de paroi, qui s'étendent en direction radiale ou tangentielle par rapport au canal.

7. Dispositif selon la revendication 1, caractérisé en ce que la conduite d'aération débouche dans le canal en passant par un intervalle annulaire (160) qui se présente entre la face frontale de l'injecteur et le corps incandescent (126).

8. Dispositif selon la revendication 1, caractérisé en ce que le canal comporte un tronçon se rétrécissant en direction du courant.

9. Dispositif selon la revendication 8, caractérisé en ce qu'au tronçon (108) du canal se rétrécissant en direction du courant fait suite un tronçon (110) s'élargissant, qui porte les structures chauffables du corps incandescent (102).

10. Dispositif selon la revendication 8, caractérisé en ce que le tronçon du canal se rétrécissant est formé dans un écran thermique disposé entre l'injecteur et le corps incandescent.

11. Dispositif selon la revendication 1, caractérisé en ce que le manchon du corps incandescent est constitué en céramique et les structures chauffables sont formées par une couche de revêtement métallique appliquée sur la surface en céramique.

12. Dispositif selon la revendication 1, caractérisé en ce que les structures chauffables du corps incandescent sont formées par un filament en spirale (182), qui est inséré, de préférence par frittage, dans un corps d'appui (180) en céramique formant le manchon.

13. Dispositif selon la revendication 12, caractérisé en ce que le filament en spirale incandescent (182) présente une section transversale de fil rectangulaire.

14. Dispositif selon la revendication 12, caractérisé en ce que le fil du filament en spirale incandescent (182) est ondulé en direction de son axe longitudinal.

15. Dispositif selon la revendication 2 ou 12, caractérisé en ce que le matériau du filament en spirale (260, 182) est constitué en un alliage de platine stabilisé en grains fins, qui contient au maximum 79% de platine, au maximum 40% de rhodium et pas plus de 1% d'iridium.

16. Dispositif selon la revendication 2, caractérisé en ce que le filament en spirale incandescent (260) est formé par un conducteur chauffant à gaine.

17. Dispositif selon la revendication 1 ou 2, caractérisé en ce que le corps incandescent (220) est constitué avec son élément de fixation (226) sous forme de pièce d'insertion et est enserré entre l'injecteur et un épaulement (216) prévu dans l'alésage de carter recevant l'injecteur.

18. Dispositif selon la revendication 1 ou 2, comportant un corps d'injecteur qui est fixé par un écrou de raccordement à un porte-injecteur, caractérisé en ce que le corps incandescent (20) et fixé par son attache à la face frontale de l'écrou de raccordement (12) éloignée du porte-injecteur.

19. Dispositif selon la revendication 1, caractérisé en ce que pour le maintien et le centrage du corps incandescent (182) est utilisé un anneau de bride (176), qui protège, au moins partiellement vis-à-vis de la chambre de combustion, la face frontale de l'injecteur située en regard du corps incandescent.

20. Dispositif selon la revendication 2, caractérisé en ce que le manchon est relié à un anneau de bride (266), qui protège l'injecteur, au moins partiellement, vis-à-vis de la chambre de combustion, et sert de fixation pour le manchon et le filament en spirale incandescent (260).

21. Dispositif selon l'une des revendications 19 et 20, caractérisé en ce qu'à l'anneau de bride (176) est fixé un anneau de protection thermique (204), constitué en un matériau bon conducteur de la chaleur, pourvu d'une lèvre annulaire (206), qui s'applique sur la surface frontale du corps (172) de l'injecteur située en regard.

22. Dispositif selon l'une des revendications précédentes, caractérisé en ce qu'un conducteur électrique (152) passe à travers un canal ménagé dans l'injecteur, et l'intervalle entre cette ligne d'amenée de courant et la paroi du canal est étanché de façon à résister à la pression par un scellement en verre fondu (154).

Fig. 1

Fig. 2

Fig. 3

## Fig. 4

## Fig. 5

**Fig. 6**

**Fig. 7**

FIG. 8

FIG. 9

## FIG. 10

272
276
270
264
268
266
262
274
280
278
260
274

## FIG. 11

272
276
288
264
282
284
296
260